Europäisches Patentamt

European Patent Office

Office européen des brevets

(19)

(11) Veröffentlichungsnummer: **0 086 964**
**B1**

(12) # EUROPÄISCHE PATENTSCHRIFT

(45) Veröffentlichungstag der Patentschrift:
02.05.85

(51) Int. Cl.⁴: **B 23 K 37/04**, B 23 Q 3/08

(21) Anmeldenummer: 83100546.7

(22) Anmeldetag: 22.01.83

(54) Verfahren zur Herstellung einer Abstützeinrichtung, insbesondere für eine Schweissvorrichtung, eines nachzubearbeitenden und/oder zu reparierenden Bauteils sowie eine nach diesem Verfahren hergestellte Abstützeinrichtung.

(30) Priorität: 05.02.82 DE 3203868

(43) Veröffentlichungstag der Anmeldung:
31.08.83 Patentblatt 83/35

(45) Bekanntmachung des Hinweises auf die Patenterteilung:
02.05.85 Patentblatt 85/18

(84) Benannte Vertragsstaaten:
BE CH DE FR GB IT LI NL SE

(56) Entgegenhaltungen:
DE - A - 1 957 608
FR - A - 2 232 405

(73) Patentinhaber: **MTU MOTOREN- UND TURBINEN-UNION MÜNCHEN GMBH**, Dachauer Strasse 665 Postfach 50 06 40, D-8000 München 50 (DE)

(72) Erfinder: **Schmidt, Werner, Ing.-grad., Waldstrasse 4, D-8061 Niederroth (DE)**
Erfinder: **Jahn, Franz, Kirchenstrasse 20, D-8061 Sigmertshausen (DE)**

## Beschreibung

Die Erfindung betrifft ein Verfahren zur Herstellung einer Abstützeinrichtung, insbesondere für eine Schweissvorrichtung, eines nachzubearbeitenden und/oder zu reparierenden Bauteils durch Ausgiessen des Bauteils an seinen abzustützenden Flächen in einer Schmelzlegierung, die im erkalteten Zustand das Bauteil abstützt, und durch Entfernen der Schmelzlegierung nach einer Bauteilbearbeitung durch Erwärmen sowie eine nach diesem Verfahren hergestellte spezielle Abstützeinrichtung in Form einer Schweissvorrichtung.

In zunehmendem Masse werden Bearbeitungsfehler an teil- und fertigbearbeiteten, zumeist komplizierten Bauteilen oder Werkstücken durch eine spezielle Nachbearbeitung oder -behandlung wie Auftragsschweissung behoben. Auch bei Verschleiss oder Beschädigungen durch Betriebsbeanspruchung können durch besondere Nachbearbeitungsmassnahmen komplizierte Bauteile wie beispielsweise Triebwerksbauteile wieder instand gesetzt werden. Dadurch ist es oft möglich, teuerste Teile vor der Verschrottung zu retten und einer Wiederverwendung zuzuführen.

Bei einer Instandsetzung eines komplizierten Bauteils durch Auftragsschweissung ist eine wichtige Voraussetzung zum Gelingen einer Instandsetzung die exakte formangepasste Abstützung des Bauteils an ausgewählten Stellen sowie der Schutz des Bauteils vor schädlichem Wärmeeinfluss des Schmelzschweissprozesses. Ein unzulässig grosser Wärmeeinfluss hat Schrumpfung und Verzug zur Folge.

Bekannte Abstützeinrichtungen zur Nachbearbeitung komplizierter Bauteile, die beispielsweise auch Hinterdrehungen enthalten, bestehen aus einer Mehrzahl von individuell gefertigten Klemmsegmenten, die der Abstützoberfläche des abzustützenden Bauteils angepasst sind. Die Klemmsegmente werden durch mechanische Bearbeitung hergestellt und durch eine Spanneinrichtung gegeneinander derart verspannt, dass das nachzubearbeitende komplizierte Bauteil definiert und in exakter Weise abgestützt dazwischenliegt, um einem Nachbehandlungsvorgang unterworfen zu werden. Mit der Kompliziertheit der Teile wächst auch der Vorrichtung- und damit verbundene Kostenaufwand. Die erhöhten Kosten sind vielfach nur bei einer Nachbehandlung von Neuteilen vertretbar, die in grosser Stückzahl hergestellt werden. Da es sich bei der Instandsetzung zumeist nur um geringe Stückzahlen, oft nur um ein teures Einzelstück, handelt, ist eine aufwendige und teure Vorrichtung beispielsweise bei einer Reparaturschweissung nach dem Stand der Technik nur selten gerechtfertigt, insbesondere im Hinblick auf die teilweise gegebenen Erfolgsaussichten bei einer Reparaturschweissung, da schädlicher Wärmeeinfluss Schrumpfung und Verzug des zu reparierenden Bauteils zur Folge haben kann.

Aufgabe der Erfindung ist die Schaffung eines Verfahrens zur Herstellung einer Abstützeinrichtung der eingangs genannten Art sowie die Schaffung einer besonderen Abstützeinrichtung zur Verwendung als Schweissvorrichtung, das bzw. die infolge der Einfachheit besonders kostengünstig ist und zu guten Instandsetzungsergebnissen führt, so dass selbst komplizierte Bauteile geringer Stückzahl oder in Einzelfertigng lohnenswert nachbehandelt oder repariert werden können.

Gelöst wird die der Erfindung zugrundeliegende Aufgabe bei einem erfindungsgemässen Verfahren dadurch, dass vor dem Ausgiessen des Bauteils im während einer Bauteilbearbeitung zu kühlenden Abstützbereich Kühlleitungen verlegt werden, die bei einer Ausgiessung durch die Schmelzlegierung eingegossen werden.

Vor einer Nachbearbeitung oder Reparatur können die eingegossenen Kühlleitungen an ein geeignetes Kühlsystem angeschlossen werden.

Der Kostenaufwand wird weiter reduziert, wenn die entfernte Schmelzlegierung für einen erneuten Ausgiessvorgang weiterverwendet wird.

Wie die Schmelzlegierung, so können auch einmal verwendete Kühlleitungen für einen erneuten Ausgiessvorgang weiterverwendet werden.

Zweckmässigerweise wird die Schmelzlegierung nach einer Bauteilbearbeitung durch Erwärmen auf ca. 150° C verflüssigt und dadurch wieder vom Bauteil nach einem Bearbeitungsvorgang wieder entfernt.

Etwaige zurückbleibende Schmelzreste können durch eine gesonderte Nachreinigung entfernt werden, die wie folgt abläuft:

1. Entfetten durch Tauchen in Trichloräthylen oder Perchloräthylen.

2. Tauchen der Bauteile in wässeriges Salpetersäurebad (53 Gew.-% $HNO_3$) für mindestens 30 min.

3. Spülen des Bauteils mit kaltem und heissem Wasser.

Um die Schmelzlegierung nach einer Bauteilbearbeitung leicht wieder entfernen zu können, wird nach einem weiteren bevorzugten erfindungsgemässen Verfahren das Bauteil vor einem Ausgiessen an seinen abzustützenden Flächen mit einem Trennmittel behandelt oder beschichtet. Entsprechend können auch die Kühlleitungen mit einem Trennmittel behandelt oder beschichtet werden.

Vorgefertigte Kühlwasserleitungen sind zweckmässigerweise Rohre aus gut wärmeleitfähigem Material wie Kupfer, die in Schlingenform vor einem Ausgiessvorgang des zu reparierenden Bauteils im Abstützbereich verlegt werden.

Eine nach dem erfindungsgemässen Verfahren hergestellte Abstützeinrichtung in Form einer Schweissvorrichtung für ein zu schweissendes Bauteil sieht vorteilhafterweise vor, dass zumindest eine das Bauteil teilweise abstützende, kühlbare Negativform des Bauteils vorgesehen ist, wobei die Negativform aus einer gegossenen Schmelzlegierung mit zumindest einer eingegossenen Kühlleitung besteht, die an ein Kühlsystem anschliessbar ist.

Aus der FR-A Nr. 2232405 ist eine Vorrichtung zum Festlegen eines beweglichen Bauteils bekannt, bei der das Bauteil in ein flüssiges Bad eingetaucht ist und durch Erstarrung des Bades infolge Abkühlung festgelegt wird. Das Bad befindet sich zusammen mit dem Bauteil in einem Behälter, in dem Kühl- bzw. Heizmittelschlangen verlegt sind, um mittels einer Heizflüssigkeit das Bad abzukühlen und erstarren zu lassen bzw. wieder aufzutauen. Über die Art der Bearbeitung des festzulegenden Bauteils ist dieser Druckschrift nichts zu entnehmen. Die Kühl- bzw. Heizmittelschlangen sind in dem Behälter wandnah und bauteilfern verlegt, um möglichst viel Raum für ein festzulegendes Bauteil freizulassen. Bei intensiver Bearbeitung des in dem erstarrten Bad festgelegten Bauteils, bei der Wärme anfällt oder bei einer Bauteilbearbeitung, die eine Wärmebehandlung einschliesst, wie z.B. eine Schweissbearbeitung, besteht die Gefahr, dass durch die erstarrte Schmelzlegierung nicht in ausreichendem Masse Wärme abgeführt werden kann und somit im Bauteil ein unzulässiger Wärmestau entsteht oder die das Bauteil umgebende Legierung stellenweise aufschmilzt.

Durch die Erfindung kann einfach und ohne grossen Zeitaufwand eine Abstützvorrichtung geschaffen werden, die universell einsetzbar und insbesondere für zu reparierende Bauteile mit komplizierten Konturen geeignet ist, selbst dann, wenn das Bauteil an unzugänglichen Stellen abgestützt werden muss, um einen guten Instandsetzungserfolg zu garantieren. Die Abstützeinrichtung mit integrierten Kühlleitungen eignet sich insbesondere als Schweissvorrichtung, da nicht nur ein exaktes definiertes Abstützen möglich ist, sondern auch die bei einer Schweissung entstehende Wärme abgeführt werden kann, so dass keine Schrumpfung oder Verzug entsteht. Das benötigte Schmelzmaterial ist vergleichsweise billig und immer wieder verwendbar. Es ergibt sich ein sehr gutes Kosten-/Nutzen-Verhältnis einer gefertigten Abstützeinrichtung, das letztlich ausschlaggebend dafür ist, dass selbst komplizierte Bauteile in Einzelfertigung wieder repariert (und vor einer Verschrottung bewahrt) werden können. Die Abstützeinrichtung gestattet auf einfache Weise eine exakte Formanpassung an die individuelle Form des zu reparierenden Werkstücks. Auf die exakte Abmessung und Form des Reparaturteils kommt es nicht an. Ersichtlich sind mechanische Abstützvorrichtungen nach dem Stand der Technik wesentlich komplizierter in der Herstellung und demzufolge teurer. Bekannte Vorrichtungen ermöglichen auch nur eine unzureichende Abstützung im Bereich komplizierter Abstützungsflächen, wie auch eine Kühlung schwierig ist. Darüber hinaus können bekannte mechanische Abstützvorrichtungen selbst bei einem Serienteil nur begrenzt eingesetzt werden, da in der Serie von Teil zu Teil abweichende Abmessungen auftreten, die eine formgenaue Abstützung erschweren.

Die Erfindung wird nachfolgend anhand von Ausführungsbeispielen unter Bezugnahme auf die Zeichnung näher erlautert. Es zeigen:

Fig. 1 einen Teilquerschnitt durch eine Abstützvorrichtung nach dem Stand der Technik,

Fig: 2 eine erfindungsgemässe Abstützeinrichtung in einem Axialschnitt,

Fig. 3 einen der Fig. 2 entsprechenden Axialschnitt durch eine andere erfindungsgemässe Ausführungsform,

Fig. 4 eine schematische Querschnittsansicht durch ein kompliziert konfiguriertes Bauteil, das in einer Schmelzlegierung ausgegossen ist und einer Auftragsschweissung unterzogen wird,

Fig. 5 das Bauteil nach Fig. 4 in einer Draufsicht, und

Fig. 6 das Bauteil nach den Fig. 4 und 5 im Schnitt längs der Linie C-C.

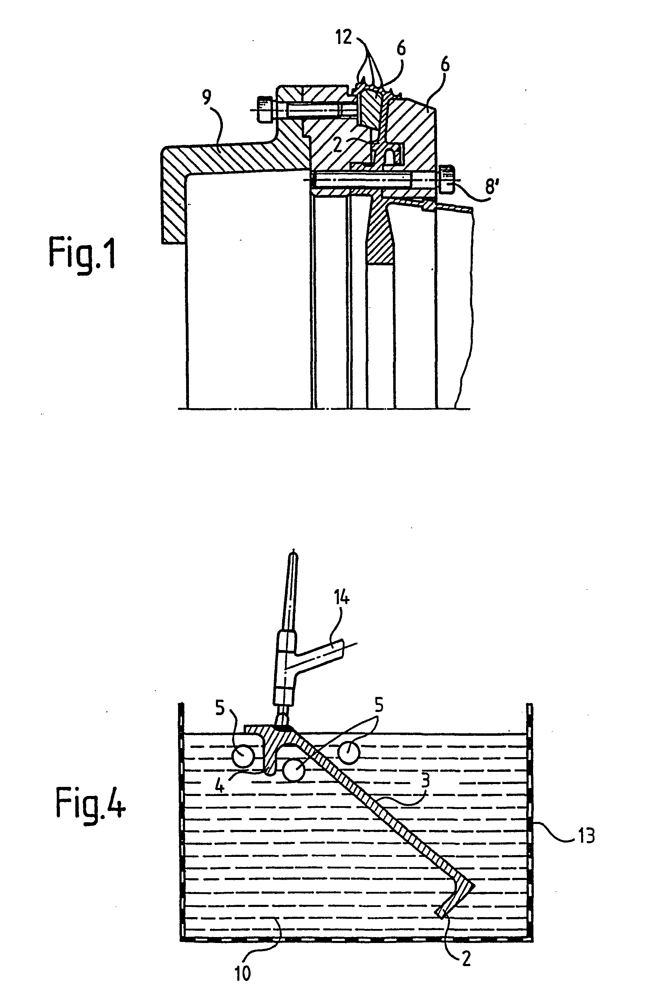

In Fig. 1 ist eine reparaturbedürftige Hochdruckverdichter-Rotorwelle 2 in einem Teilschnitt dargestellt, deren radial äussere reparaturbedürftige Labyrinthdichtungen 12 durch eine Auftragsschweissung wieder instand gesetzt werden sollen. Das Bauteil 2 ist an einer rotationssymmetrischen Halteeinrichtung 9 mit Hilfe einer mehrteiligen Abstützvorrichtung angeflanscht.

Die Abstützvorrichtung nach Fig. 1 repräsentiert den Stand der Technik und besteht aus mehreren Klemmsegmenten 6, die unterschiedlich konfiguriert und der zugehörigen Abstützoberfläche des Bauteils 2 angepasst sind. Das gemäss Fig. 1 linke Klemmsegment 6 in Kreisringform stützt eine hinterdrehte Oberfläche des kompliziert gestalteten Bauteils 2 ab und ist zwecks einer Montage und Demontage geteilt. Sämtliche Klemmsegmente 6 sind mechanisch bearbeitet, und zwar entsprechend der Konfiguration der zugehörigen Abstützflächen des Bauteils 2. Die Klemmsegmente 6 sind mittels einer Verschraubung 8' und eines Zwischenspannrings an der Halteeinrichtung 9 angeflanscht. Ersichtlich können die Klemmsegmente 6 nur unter Schwierigkeiten und grösserem Aufwand der Konfiguration des zu reparierenden Bauteils 2 angepasst werden. Für eine Montage und Demontage müssen einzelne Klemmsegmente zumindest zweiteilig aufgebaut sein. Die bei einer Auftragsschweissung entstehende Wärme wird nur schlecht abgeführt, so dass Schrumpfung und Verzug des zu reparierenden Bauteils 2 die Folge sein können. Insgesamt betrachtet eignet sich demnach die bekannte Vorrichtung nur bedingt für ein zu reparierendes, kompliziert gestaltetes Bauteil, zumindest dann, wenn dieses ein Einzelstück darstellt. In diesem Fall ist es zumeist nicht lohnenswert, eine aufwendige teure Abstützvorrichtung herzustellen. Das verschlissene oder beschädigte teure Bauteil 2 muss der Verschrottung zugeführt werden.

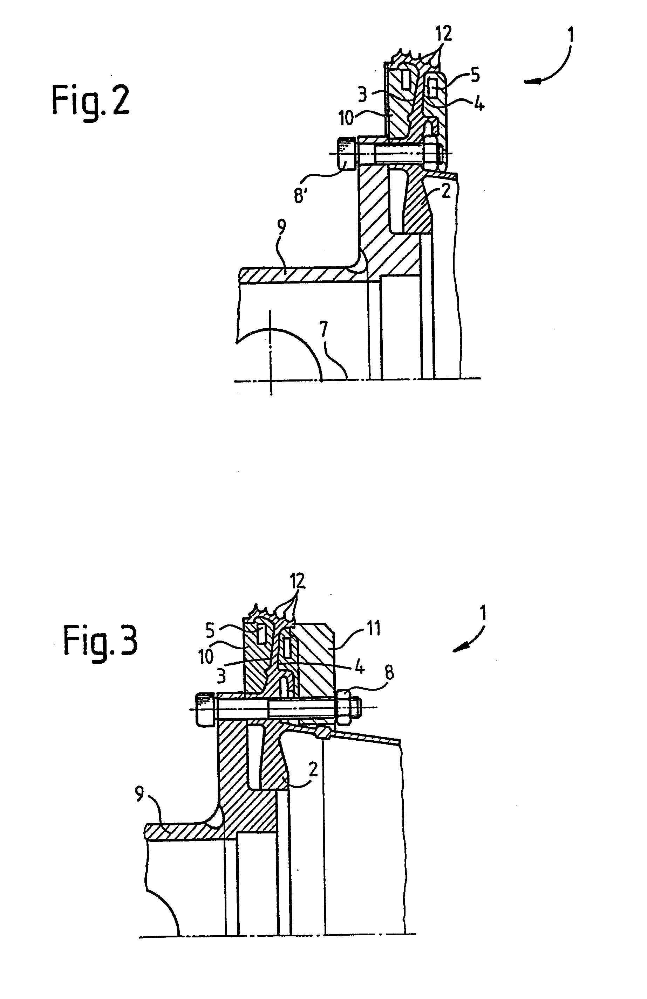

Fig. 2 zeigt das in Fig. 1 dargestellte komplizierte reparaturbedürftige Bauteil 2 mit einer Abstützeinrichtung 1 gemäss der Erfindung.

Die Abstützeinrichtung 1 besteht im wesentlichen aus erkalteten Schmelzlegierungsteilen 10, die individuell den abzustützenden Flächen 3, 4 des Reparaturbauteils 2 durch einen Ausgiessvorgang angepasst sind. In den Schmelzlegierungsteilen 10 sind Kühlleitungen 5 eingelassen, und zwar in der Nähe der abzustützenden Flächen 3, 4 im Bereich der Reparaturstelle, d.h. bei den zu reparierenden Labyrinthdichtungen 12. Die an ein nicht dargestelltes Kühlsystem angeschlossenen Kühlleitungen 5 führen die bei einer Auftragsschweissung entstehende Wärme ab, so dass keine grösseren globalen oder lokalen Erhitzungen und Überhitzungen im Bauteil 2 sowie in der Form 10 entstehen können. Form und Bauteil 2 erfahren bei einem Instandsetzungsvorgang keinen nennenswerten Verzug wie auch keine Schrumpfung.

Im folgenden wird die Herstellung der Abstützeinrichtung 1 gemäss Fig. 2 beschrieben.

Die zu reparierende Hochdruckverdichter-Rotorwelle 2 wird mittels einer Verschraubung 8' an der Halteeinrichtung 9 angeflanscht. Anschliessend wird die Halteeinrichtung 9 zusammen mit dem angeflanschten Bauteil 2 um 90° derart gedreht, dass die Rotorachse 7 lotrecht steht. Dadurch entsteht im Bereich der abzustützenden Flächen 3 bzw. 4 ein Ringraum mit einer oberen Öffnung. In den Ringraum wird die zugehörige Kühlleitung 5 derart verlegt, dass beide endseitigen Öffnungen durch die obere Ringraumöffnung reichen. Anschliessend wird der Ringraum durch eine niedrigschmelzende Schmelzlegierung mit einem 60%igen Zinnanteil ausgegossen, so dass ein Schmelzlegierungsformteil 10 entsteht. Nach einem Erkalten der Schmelzlegierung wird die gesamte Anordnung um 180° gedreht, so dass der andere, noch auszugiessende Ringraum nach oben weist. Nach einem Verlegen der zugehörigen Kühlleitung 5 wird auch dieser Ringraum mit der gleichen Schmelzlegierung ausgegossen. Sind beide Schmelzlegierungs-Abstützungsbereiche 10 verfestigt, dann kann mit der eigentlichen Reparaturschweissung im Bereich der Labyrinthdichtungen 12 begonnen werden. Hierbei sind die Anschlussöffnungen der Kühlleitungen 5 an ein Kühlwassersystem angeschlossen, um die im Betrieb entstehende Wärme in ausreichender Menge abzuführen. Nach einem Instandsetzungsvorgang wird die Anordnung im Bereich der Schmelzlegierungsteile 10 auf ca. 150°C erwärmt, so dass sich die Schmelzlegierungsteile verflüssigen und dadurch entfernt werden. Abschliessend werden die Kühlleitungen 5 entfernt sowie die Abstützflächen 3, 4 von Schmelzresten gereinigt. Das einmal verwendete Schmelzlegierungsmetall kann immer wieder verwendet werden. Auch die Kühlleitungen 5 können durch einfache Verformung mehrmals eingesetzt werden.

Dadurch kann mit Hilfe einfacher und billiger Mittel eine exakte Abstützeinrichtung für ein sehr kompliziertes zu reparierendes Bauteil 2 geschaffen werden, das beispielsweise durch eine Mikroplasma-Auftragsschweissung zu regenerieren ist. Das zu reparierende Teil wird mit einer Schmelzlegierung z.B. ® Cerro Tru 58 Gew.-% Bi, 42 Gew.-% Sn Smp. 138°C oder ® Fry Cap 58 Gew.-% Bi, 42 Gew.-% Sn Smp. 138°C ausgegossen, in die vorgefertigte Kühlwasserleitungen (Kupferrohre) eingebettet sind. Die Schmelzlegierung übernimmt die Stützung des Bauteils 2, die Fixierung der Kühlleitungen 5 sowie den Wärmetransport von der Aufschweissstelle zum Kühlwasser.

In Fig. 3 ist eine Abstützeinrichtung 1 ähnlich derjenigen nach Fig. 2 veranschaulicht. Einander entsprechende Teile sind mit gleichen Bezugszeichen versehen. Im Gegensatz zur Ausführungsform nach Fig. 2 weist der gemäss Fig. 3 rechte Schmelzlegierungs-Abstützring 10 einen angepassten Halterungsring 11 auf, der über eine Verschraubung 8 mit der Halteeinrichtung 9 verschraubt ist. Der Halterungsring 11 greift umfangsmässig in das zu reparierende Bauteil (Rotorwelle) unter einer Vorspannung ein. Diese Vorspannung dient zum Ausgleich eines eventuellen Axialverzuges der Rotorwelle, der andernfalls bei einer Reparaturschweissung entstehen könnte.

In alternativer Ausgestaltung der Ausführungsbeispiele nach den Fig. 2 und 3 können auch mehr als zwei Abstützteile 10 aus einer niedrigschmelzenden Schmelzlegierung vorgesehen sein. Anzahl und Form der Abstützteile hängen von der Konfiguration des zu reparierenden Bauteils 2 ab. Einzelne Bereiche des zu reparierenden Bauteils können gezielt unter eine zusätzliche Vorspannung gesetzt werden, um örtlich eine erhöhte Abstützkraft für einen Reparaturvorgang zu erzielen, und zwar vor einem Ausgiessen des Bauteils mit Schmelzlegierung durch Anordnung geeigneter mechanischer Vorspanneinrichtungen.

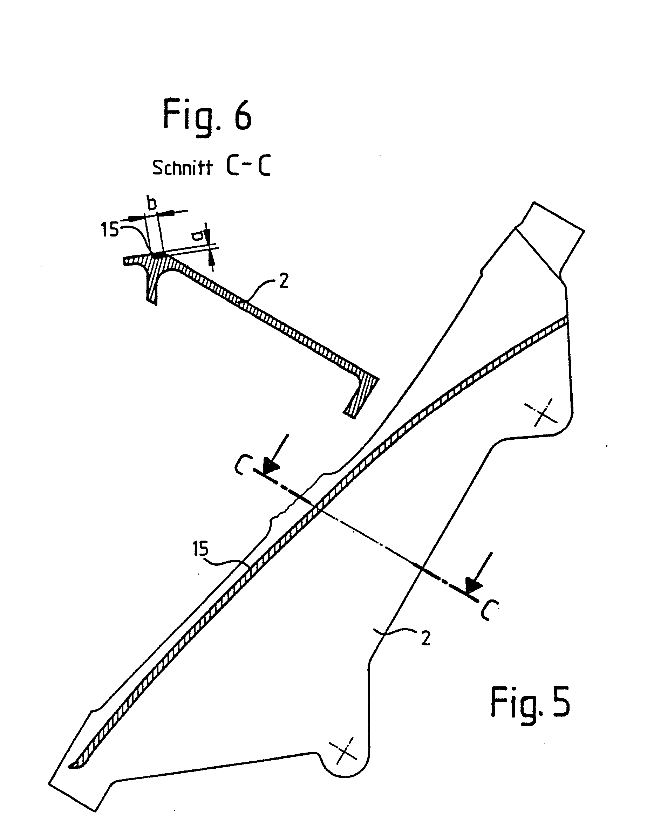

Die in Fig. 4 veranschaulichte schematische Querschnittsansicht zeigt ein anderes, kompliziert gestaltetes zu reparierendes Bauteil 2, das ursprünglich durch Kopierfräsung hergestellt worden ist. Das Bauteil 2 (Querträger aussen an einem Schubumkehrer eines Triebwerks) ist in einer Draufsicht in Fig. 5 und im Schnitt C-C der Fig. 5 in Fig. 6 dargestellt. Das Bauteil soll im Bereich a × b gemäss Fig. 6 eine Auftragsschweissung erfahren. Bei Fehlen der Materialmenge a × b ist das Bauteil 2 verschrottungsreif.

Gemäss Fig. 4 wird das Bauteil 2 mit der Reparaturstelle nach oben in einem Blechbehälter 13 angeordnet. Kühlrohrschlingen 5 werden im Bereich der Reparaturstelle unterhalb und seitlich des Bauteils 2 im Blechbehälter 13 verlegt, wobei die Enden der Kühlrohre nach oben weisen. Anschliessend wird in den Blechbehälter 13 eine verflüssigte Schmelzlegierung 10 eingegossen, die nach einem Erhärten eine exakt formschlüssige Abstützung des Bauteils 2 ausserhalb der Reparaturstelle ermöglicht, wobei die Kühlrohrschlingen 5 (abgesehen von den Anschlussstutzen) eingegossen sind. Nach einem Anschluss der Kühlrohrschlingen 5 an ein nicht dargestelltes Kühlwasser-Umlaufsystem kann mit der Mikroplasma-Auftragsschweissung mit Hilfe des Schweissgeräts 14 begonnen werden, um dem Bauteil 2 Material im Bereich a × b zuzuführen.

Nach einem Reparaturvorgang wird der gesamte Blechbehälter 13 einschliesslich Inhalt auf ca. 150°C erwärmt, so dass sich die Schmelzlegierung 10 verflüssigt und das reparierte Bauteil 2 von der verflüssigten Schmelzlegierung wieder getrennt werden kann.

**Patentansprüche**

1. Verfahren zur Herstellung einer Abstützeinrichtung, insbesondere für eine Schweissvorrichtung, eines nachzubearbeitenden und/oder zu reparierenden Bauteils (2), durch Ausgiessen des Bauteils an seinen abzustützenden Flächen in einer Schmelzlegierung, die im erkalteten Zustand das Bauteil abstützt, und durch Entfernen der Schmelzlegierung nach einer Bauteilbearbeitung durch Erwärmen, dadurch gekennzeichnet, dass vor dem Ausgiessen des Bauteils (2) im während einer Bauteilbearbeitung zu kühlenden Abstützbereich Kühlleitungen (5) verlegt werden, die bei einer Ausgiessung durch die Schmelzlegierung (10) eingegossen werden.

2. Verfahren nach Anspruch 1, dadurch gekennzeichnet, dass vor einer Nachbearbeitung oder Reparatur des Bauteils (2) die eingegossenen Kühlleitungen (5) an ein Kühlsystem angeschlossen werden.

3. Verfahren nach einem der Ansprüche 1 oder 2, dadurch gekennzeichnet, dass die entfernte Schmelzlegierung (10) für einen erneuten Ausgiessvorgang weiterverwendet wird.

4. Verfahren nach den Ansprüchen 1 bis 3, dadurch gekennzeichnet, dass die Kühlleitungen (5) für einen erneuten Ausgiessvorgang weiterverwendet werden.

5. Verfahren nach den Ansprüchen 1 bis 4, dadurch gekennzeichnet, dass die Schmelzlegierung (10) nach einer Bauteilbearbeitung durch Erwärmen auf ca. 150°C verflüssigt und dadurch wieder vom Bauteil (2) entfernt wird.

6. Verfahren nach Anspruch 5, dadurch gekennzeichnet, dass nach einer Erwärmung und Grobentfernung der Schmelzlegierung (10) das Bauteil (2) von Schmelzresten gereinigt wird.

7. Verfahren nach den Ansprüchen 1 bis 6, dadurch gekennzeichnet, dass das Bauteil (2) vor einem Ausgiessen an seinen abzustützenden Flächen (3, 4) und/oder die Kühlleitungen (5) mit einem Trennmittel behandelt oder beschichtet wird (werden).

8. Verfahren nach den Ansprüchen 1 bis 7, dadurch gekennzeichnet, dass als Kühlleitungen (5) Rohre aus gut wärmeleitfähigem Material wie Kupfer verwendet werden.

9. Nach einem oder mehreren der vorgenannten Verfahren hergestellte Abstützeinrichtung für ein zu schweissendes Bauteil, dadurch gekennzeichnet, dass zumindest eine das Bauteil (2) teilweise abstützende, kühlbare Negativform des Bauteils (2) vorgesehen ist, wobei die Negativform aus einer gegossenen Schmelzlegierung (10) mit zumindest einer eingegossenen Kühlleitung (5) besteht, die an ein Kühlsystem anschliessbar ist.

## Claims

1. A method of producing a supporting means, in particular for an apparatus for welding, in the case of a component (2) requiring repair and/or refinishing, by pouring around the surfaces of the component which have to be supported a fusible alloy which, when cooled, supports the component and, after the work on the component is completed, by removing the fusible alloy by heating, characterised in that, prior to casting of the component (2) in fusible alloy, in the area of support which has to be cooled during working on the component, cooling lines (5) are laid which are cast in when the fusible alloy (10) is poured.

2. A method according to Claim 1, characterised in that, prior to any refinishing or repair of the component (2), the cast-in cooling lines (5) are connected to a cooling system.

3. A method according to Claim 1 or 2, characterised in that the removed fusible alloy (10) is used again for a fresh casting operation.

4. A method according to Claims 1 to 3, characterised in that the cooling lines (5) are used again for a fresh casting process.

5. A method according to Claims 1 to 4, characterised in that, after working of a component, the fusible alloy (10) is liquefied by being heated to approximately 150°C and is thus removed again from the component (2).

6. A method according to Claim 5, characterised in that, after a heating and coarse removal of the fusible alloy (10), the component (2) is cleaned to remove any residue of molten material.

7. A method according to Claims 1 to 6, characterised in that, prior to casting, those faces (3, 4) of the component (2) which have to be supported and/or the cooling lines (5) are treated or coated with a separating agent.

8. A method according to Claims 1 to 7, characterised in that tubes of a readily heat-conductive material such as copper are used as the cooling lines (5).

9. A supporting means for a component which is to be welded and produced according to one or more of the afore-mentioned methods, characterised in that at least one coolable negative mould of the component (2) which partly supports the component (2) is provided, the negative mould consisting of a cast fusible alloy (10) with at least one integrally cast cooling line (5) which is adapted to be connected to a cooling system.

## Revendications

1. Procédé pour la réalisation d'un dispositif de support, notamment pour un dispositif de soudure, d'une pièce constitutive (2) à retoucher et/ou à réparer, par scellement de cette pièce constitutive sur ses surfaces d'appui dans un alliage fusible qui supporte cette pièce constitutive lorsqu'il est refroidi et par élimination de l'alliage fusible à réchauffement après l'usinage de la pièce constitutive, procédé caractérisé en ce que, avant le scellement de la pièce constitutive (2), des canalisations de refroidissement (5) sont posées dans la zone d'appui à refroidir pendant l'usinage de la pièce constitutive, ces canalisations étant enrobées lors du scellement par l'alliage fusible (10).

2. Procédé selon la revendication 1, caractérisé en ce que, avant une retouche ou une réparation de la pièce constitutive (2), les canalisations de refroidissement (5) ainsi enrobées sont raccordées à un système de refroidissement.

3. Procédé selon l'une des revendications 1 ou 2, caractérisé en ce que l'alliage fusible (10) ainsi éliminé est réutilisé pour un nouveau processus de scellement.

4. Procédé selon les revendications 1 à 3, caractérisé en ce que les canalisations de refroidissement (5) sont réutilisées pour un nouveau processus de scellement.

5. Procédé selon les revendications 1 à 4, caractérisé en ce que l'alliage fusible (10) est liquéfié par chauffage à environ 150°C après une retouche de la pièce constitutive et est ainsi éliminé à nouveau de la pièce constitutive (2).

6. Procédé selon la revendication 5, caractérisé en ce que, après un échauffement et une élimination approximative de l'alliage fusible (10), la pièce constitutive (2) est nettoyée des résidus de l'alliage fondu.

7. Procédé selon les revendications 1 à 6, caractérisé en ce que la pièce constitutive (2), avant un scellement sur ses surfaces d'appui (3, 4), et/ou les canalisations de refroidissement (5), est traitée ou enduite d'un agent de séparation ou bien sont traitées ou enduites d'un agent de séparation.

8. Procédé selon les revendications 1 à 7, caractérisé en ce qu'on utilise, comme canalisations de refroidissement (5), des tubes en un matériau bon conducteur de la chaleur, tel que du cuivre.

9. Dispositif de support, selon un ou plusieurs des procédés précités, pour une pièce constitutive à souder, dispositif caractérisé en ce qu'il est prévu au moins une forme négative de la pièce constitutive (2), susceptible d'être refroidie et supportant partiellement cette pièce négative (2), cette forme négative étant constituée d'un alliage fusible coulé (10) avec au moins une canalisation de refroidissement (5) enrobée, et qui est susceptible d'être raccordée à un système de refroidissement.

Fig.1

Fig.4

Fig. 2

Fig. 3

# Fig. 6

Schnitt C- C

# Fig. 5